# EUROPÄISCHE PATENTSCHRIFT

(11) **EP 0 596 221 B1**
(45) Veröffentlichungstag und Bekanntmachung des Hinweises auf die Patenterteilung: **29.01.1997**
(21) Anmeldenummer: 93114608.8
(22) Anmeldetag: 10.09.1993
(51) Int. Cl.: A23G 9/22, A23G 9/12

(54) **Speiseeisherstellungsmaschine**
Ice-cream making machine
Machine pour la fabrication de crèmes glacées

(30) Priorität: 05.11.1992 IT MI920965 U
(43) Veröffentlichungstag der Anmeldung: 11.05.1994
(73) Patentinhaber: CRM S.p.A., I-20073 Codogno, Milano (IT)
(72) Erfinder: Cigolini, Aldo, 2070 Fombio (MI) (IT)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 100 469
- EP-A- 0 161 679
- EP-A- 0 206 430
- EP-A- 0 386 323
- WO-A-88/07330
- FR-A- 2 558 688
- GB-A- 2 077 128

## Beschreibung

Die Erfindung betrifft eine Speiseeisherstellungsmaschine nach dem Oberbegriff des Patentanspruchs 1.

Während bei in der Praxis am meisten verwendeten Speiseeisherstellungsmaschinen entweder mit einem vertikal angeordneten umlaufenden Behälter, in den ein Rührwerkzeug eingebracht werden kann, oder mit einer horizontal angeordneten Trommel, in der sich ein horizontales Rührwerk befindet, gearbeitet wird (DE-OS 22 59 278, DE-OS 39 38 904), wobei insbesondere das Einfüllen der flüssigen Masse und die Reinigung problematisch sind, sind auch schon Speiseeisherstellungsmaschinen der eingangs genannten Gattung mit aufrechtstehendem oben offenen stationären Behälter und darin drehbar angeordnetem Rührwerk bekannt (EP-A-0 161 679; FR-A-2 558 688). Derartige Speiseeisherstellungsmaschinen eignen sich besonders zur Herstellung vergleichsweise kleiner Speieeismengen im Bereich von 5 bis 15 Litern. Sie sind leicht zu befüllen und zu reinigen. Ein Problem bei diesen Speiseeisherstellungsmaschinen besteht darin, einerseits beim Eisherstellungsbetrieb eine möglichst schnelle und gleichmäßige Durchmischung und Ausfrierung der Eismasse zu erzielen und andererseits nach Fertigstellung des Speiseeises dieses relativ schnell und ohne großen Handhabungsaufwand aus dem Behälter herauszubekommen.

Aus der WO 88/07330 ist eine Speiseeismaschine bekannt, in welcher durch Umkehr des Rührwerks die Speiseeisausgabe nach der Kippung des bei der Speiseeisherstellung vertikal stehenden zylindrischen Behälters in eine horizontale Position durch eine zentral im Deckel angeordnete Entnahmeöffnung erfolgen kann. Durch die erforderliche kippbare Lagerung ist die Maschine voluminös und der Handhabungsaufwand beträchtlich.

Das Ziel der Erfindung besteht somit darin, eine Speisseisherstellungsmaschine der eingangs genannten Gattung zu schaffen, bei der die flüssige Ausgangsmasse sowie jederzeit verschiedene feste und/oder flüssige Zusatze problemlos von oben eingeschüttet werden kann, wahrend der anschließenden Speiseeisherstellung eine schnelle und gleichmäßige Durchmischung sowie Gefrierung der flüssigen Masse gewährleistet ist und nach Fertigstellung des Speiseeises ein schnelles und weitgehend vollständiges Ausstoßen der fertigen Speiseeismasse möglich ist. Auch soll eine einfache und perfekte Sauberhaltung möglich sein.

Zur Lösung dieser Aufgabe sind die Merkmale des kennzeichnenden Teils des Patentanspruchs 1 vorgesehen.

Dadurch, daß die Antriebswelle unabhängig von einem etwaigen Deckel und insbesondere nur im Bereich der Bodenwand drehgelagert ist, ist der Innenraum des Behälters von oben über seinen gesamten Querschnitt zugänglich, da der normalerweise oben vorgesehene Deckel vollständig abgenommen bzw. aufgeklappt werden kann, nachdem in ihm kein Drehlager vorgesehen ist. Durch die erfindungsgemäße Ausbildung des Rührwerks wird bei Herstellung des Speiseeises eine stetige und gleichmäßige Strömung im Bereich der Umfangswand nach oben und im Bereich der Drehachse axial nach unten herbeigeführt, wodurch das im Bereich der Umfangswand gekühlte bzw. von der Umfangswand und der Bodenwand abgeschabte Eis in einem gleichförmigen Strom nach oben, radial nach innen und dann wieder nach unten geführt wird. Aufgrund dieses Kreislaufes wird eine außerordentlich große Verdampferfläche möglich sowie eine schnelle und intensive Durchmischung und Ausfrierung der flüssigen bzw. teigartig werdenden Speiseeismasse erzielt. Die Folge ist nicht nur ein optimaler und gleichmäßiger Wärmeentzug in bezug auf alle Bereiche der flüssigen Masse, sondern auch ein Gefriervorgang, der eine örtliche großräumigere Kristallbildung ausschließt. Aufgrund der Drehbewegung des Rührwerkzeugs ist die Gesamtbewegung der Speiseeismasse bei der Herstellung schraubenartig. Wird nach Fertigstellung des Speiseeises die Drehrichtung des Rührwerkzeuges umgekehrt, so werden in ihr Bewegungskomponenten erzeugt, die zu einem schnellen, intensiven und weitgehend vollständigen Ausstoßen der Masse aus der dann geöffneten Entnahmeöffnung führen.

Die Bedienungsperson braucht also lediglich die Drehrichtung und gegebenenfalls Drehzahl des Rührwerks und den Verschluß der Entnahmeöffnung in geeigneter Weise zu steuern, damit nach dem Einfüllen der flüssigen Masse das Speiseeis bei optimalem Zeit- und Gefrierablauf schnell fertiggestellt und anschließend schnell und vollständig abgegeben wird.

Es ist in einer bevorzugten Ausführungsform möglich, die Speiseeismasse weit entfernt von dem Drehlager der eigentlichen Antriebswelle anzuordnen, so daß keine Gefahr besteht, daß Öl aus dem Lager in die Speiseeismasse bzw. umgekehrt Speiseeismasse in das Lager gelangt. Eine besonders vorteilhafte bauliche Ausführungsform, die dies gewährleistet, ist durch Anspruch 15 gekennzeichnet.

Dadurch, daß die Lamellen in bevorzugter Weise nur unten am Antriebsrohr befestigt sind, während sie oben in einem bevorzugten Ausführungsbeispiel miteinander, beispielsweise durch Verbindungsstangen gekuppelt sind, wird in besonders vorteilhafter Weise erreicht, daß die im oberen Bereich der Lamellen mit einer erheblichen radialen Bewegungskomponente nach innen beförderte Eismasse radial innen von den nach oben weisenden Schenkeln der L-förmigen Lamellen nicht mehr in Umfangsrichtung mitgenommen wird, so daß die Speiseeismasse radial innen von den betreffenden Schenkeln eine wesentlich reduzierte Drehbewegung ausführt, was im Sinne einer schnellen und intensiven Durchmischung ist.

Besonders vorteilhafte Anordnungen der Lamellen, welche die schnelle und intensive Durchmischung der Eismasse begünstigen, sind durch die Ansprüche 4 bis 12 gekennzeichnet.

Sofern zwischen den Schabkanten der aufrechtstehenden Schenkel der L-förmigen Lamellen Unterbrechungen vorhanden sind, sollten diese bei den verschiedenen Rührwerkzeugen in axialer Richtung so gegeneinander versetzt sein, daß bei einem vollständigen Umlauf des Rührwerks jeder Bereich der Umfangswand zumindest einmal von einer Schabkante überstrichen worden ist.

Die Ausführungsform nach Anspruch 14 trägt dazu bei, daß der Grad der Mitnahme der Speiseeismasse in Arbeitsdrehrichtung von unten nach oben radial von innen nach außen etwas abnimmt, was im Interesse einer schnellen und intensiven Ausfrierung ist.

Für einen intensiven Mischvorgang verbunden mit einfacher Herstellbarkeit und guter Reinigungsmöglichkeit ist die Ausführungsform nach Anspruch 12 zweckmäßig.

Von besonderem Vorteil ist es, wenn die Drehgeschwindigkeit des Rührwerks in den beiden möglichen Drehrichtungen gemäß den Ansprüchen 17 oder 18 unterschiedlich ist.

Auf diese Weise ist es möglich, die Zentrifugalwirkung bei der Speiseeisherstellung optimal auf die Bedürfnisse eines intensiven und schnellen Ausfriervorgangs einzustellen, während zum Ausstoßen der fertigen Speiseeismasse bei umgekehrter Drehrichtung die Zentrifugalkraft so erhöht werden kann, daß ein schneller und vor allen Dingen auch vollständiger Ausstoß der Speiseeismasse durch die Entnahmeöffnung eintritt.

Für letzteres ist die Ausbildung nach den Ansprüchen 19, 20 besonders vorteilhaft.

Die Ausbildung des Verschlußschiebers nach Anspruch 20 hat den Vorteil, daß einerseits ein einwandfreier Verschluß bei der Speiseeisherstellung gewährleistet ist, andererseits aber auch eine gute Reinigungsmöglichkeit für den Schieber und die Entnahmeöffnung besteht.

Für die wirtschaftliche Herstellung sind die Merkmale des Anspruches 22 wichtig. Aufgrund der Verwendung eines Untersetzungsgetriebes können beispielsweise hochdrehende Vierpol-/Zweipol-Elektromotoren anstelle der teureren Achtpol-/Vierpol-Elektromotoren verwendet werden.

Die Höhen-/Durchmesserverhältnisse nach Anspruch 23 sind einerseits für einen kompakten Aufbau und andererseits für eine optimale Strömung der Speiseeismasse während ihrer Herstellung zweckmäßig.

Das Ziel der vorliegenden Erfindung wird weiter durch ein Verfahren nach Anspruch 25 erreicht.

Vorteilhafte Ausführungsformen des Herstellungsverfahrens sind in abhängigen Verfahrensansprüchen angegeben.

Die Erfindung wird im folgenden beispielsweise anhand der Zeichnung beschrieben; in dieser zeigt:
- Fig. 1: eine teilweise geschnittene Seitenansicht einer erfindungsgemäßen Speiseeisherstellungsmaschine,
- Fig. 2: eine Draufsicht des Gegenstandes der Fig. 2 bei abgenommenem Deckel und
- Fig. 3: eine Vorderansicht eines Möbels, in welches eine erfindungsgemäße Speiseeisherstellungsmaschine eingebaut ist.

### Bezugszeichenliste

- 1: Speiseeisherstellungsmaschine
- 2: Möbel
- 3: Frontplatte
- 4: Isoliergefäß
- 5: Rührwerk
- 6: Antriebseinheit
- 7: Bodenwand
- 8: Umfangswand
- 9: Deckel
- 10: Scharnier
- 11: Ausschäumung
- 12: Kühlschlange
- 13: Entnahmeöffnung
- 14: Auslaßrührstück
- 15: Verschlußschieber
- 16: Schwenkwelle
- 17: Rutsche
- 18: Betätigungsgriff
- 19: Antriebswellenrohr
- 20: Rührwerkzeug (Lamelle)
- 21: Befestigungsschraubkappe
- 22: Verbindungsstange
- 23: Drehachse
- 24: Bodenschabekante
- 25: Wandschabekante
- 26: Achse der Entnahmeöffnung
- 27: Unterbrechung
- 28: Zwischenraum
- 29: Innenkante
- 30: Ecke
- 31: Standrohr
- 32: Antriebswelle
- 33: Motor
- 34: Getriebe
- 35: Ringdichtung
- 36: Edelstahlbehälter
- 37: Verschlußkopf
- 38: Verschlußbereich
- 39: Platte
- 40: Schüssel
- 41: Schaltknopf

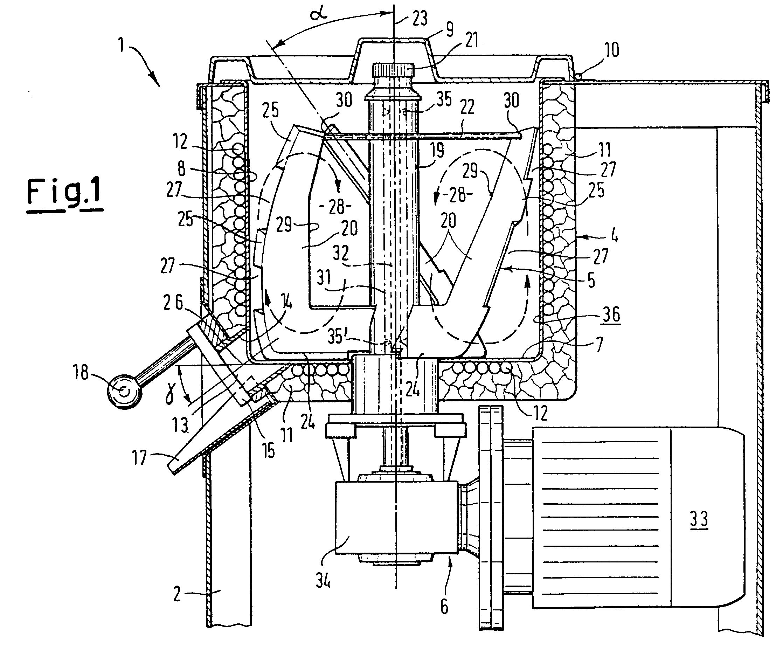

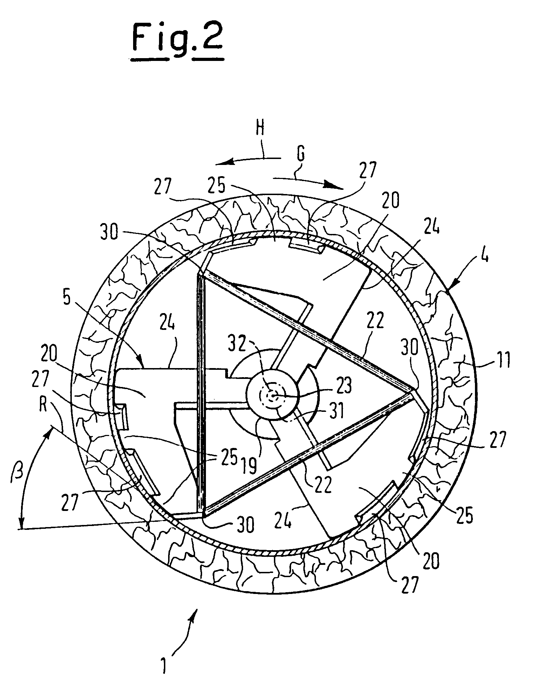

Nach den Fig. 1 und 2 weist eine erfindungsgemäße Speiseeisherstellungsmaschine ein kreiszylindrisches Isoliergefäß 4 auf, welches innen einen kreiszylinderförmigen Behälter 36 aus Edelstahlblech mit einer ebenen Bodenwand 7 und einer kreiszylindrischen Umfangswand 8 und eine außen an die Bodenwand 7 und die Umfangswand 8 anschließende Isolierausschäumung 11 aufweist, die außen vorzugsweise noch von einer Abschlußumhüllung umgeben ist.

Unmittelbar hinter der Umfangswand 8 bzw. unmittelbar unter der Bodenwand 7 ist Isolierausschäumung 11 um Kühlschlangen 12 herumgegossen, die den Edelstahlblechbehälter 36 möglichst gleichmäßig kühlen, ohne merkliche Wärmemengen von außen aufzunehmen. Vorzugsweise sollen die Kühlschlangen 12 den Blechbehälter 36 von außen bzw. unten berühren.

Innerhalb des Behälters 36 ist ein Rührwerk 5 angeordnet, welches aus einem zentralen, mit dem Behälter 36 koaxialen Antriebswellenrohr 19 und an dessen unterem Ende befestigten, im wesentlichen L-förmigen Lamellen 20 besteht, die eine die Bodenwand 7 beruhrende Bodenschabekante 24 und eine der Umfangswand 8 zusammenwirkende Wandschabekante 25 aufweisen. Während die Bodenschabkanten 24 durchgehend sind, befinden sich zwischen den Wandschabekanten 25 Unterbrechungen 27, wobei jedoch die Unterbrechungen 27 der aus den Fig. 1 und 2 ersichtlichen drei Lamellen 20 in Axialrichtung relativ zueinander so versetzt sind, daß bei einem vollständigen Umlauf des Rührwerks 5 jeder mit den Lamellen 20 radial ausgerichtete Bereich der Umfangswand 8 einmal mit einer Wandschabekante 25 in Berührung gekommen ist.

Wie in den Fig. 1 und 2 strichpunktiert angedeutet ist, umgibt das Antriebswellenrohr 19 ein fest im Bereich des Bodens 7 konzentrisch zum Behälter 36 angeordnetes stationäres Standrohr 31, durch dessen Innenraum hindurch sich ebenfalls konzentrisch zum Behälter 36 eine vorzugsweise massiv ausgebildete Antriebswelle 32 erstreckt, die durch den Boden des Behälters 36 dicht hindurchgeführt ist und mit der Abtriebswelle eines unter dem Behälter 36 angeordneten Untersetzungsgetriebes 34 drehfest verbunden ist. An das Untersetzungsgetriebe 34 ist seitlich ein Elektromotor 33 angeflanscht, der in entgegengesetzten Drehrichtungen mit unterschiedlicher Drehzahl antreibbar ist.

Zwischen dem oberen Ende des Standrohres 31 und der Antriebswelle 32 sowie zwischen dem unteren Ende des Standrohres 31 und dem Antriebswellenrohr 19 ist eine Ringdichtung 35 bzw. 35' beispielsweise in Form einer Büchse vorgesehen.

Das obere Ende der Antriebswelle 32 ragt oben aus dem Standrohr 31 hinaus und ist beispielsweise durch eine Befestigungsschraubkappe 21 in nicht im einzelnen dargestellter Weise lösbar mit dem Antriebswellenrohr 19 verbunden. Nach Abschrauben der Schraubkappe 21 kann das Antriebswellenrohr 19 mit den daran befestigten Lamellen 20 nach oben aus dem Behälter 36 zwecks Reinigung, Reparatur oder Austausch herausgenommen und in umgekehrter Richtung wieder eingesetzt und befestigt werden.

Hierzu ist es lediglich erforderlich, den das Isoliergefäß 4 oben abdeckenden, vorzugsweise transparenten Deckel 9 um das ihn haltende Scharnier 10 nach oben aufzuklappen.

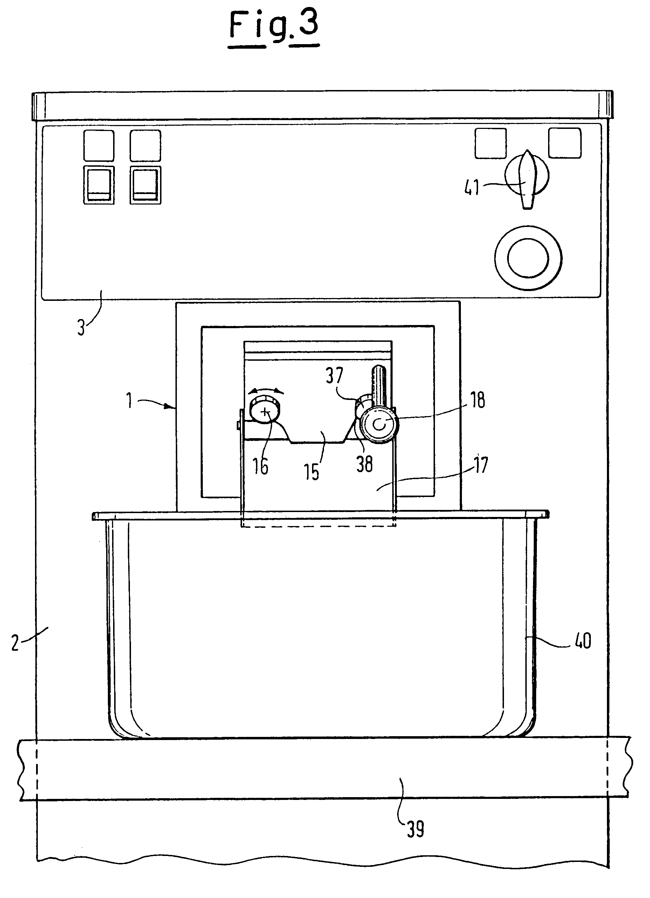

Im Eckbereich zwischen der Bodenwand 7 und der Umfangswand 8 ist nach Fig. 1 eine Entnahmeöffnung 13 vorgesehen, die durch ein das Isoliermaterial 11 durchsetzendes Auslaßrohrstück 14 realisiert ist, dessen Achse 26 einen Winkel γ von 35° mit der Horizontalen einschließt. Die Entnahmeöffnung 13 ist durch einen auch aus Fig. 3 ersichtlichen Verschlußschieber 15 abgeschlossen, welcher flach auf der äußeren Stirnwand des Auslaßrohrstücks 14 dicht aufsitzt. Der Verschlußschieber 15 ist um eine aus Fig. 3 ersichtliche Schwenkwelle 16 verschwenkbar, und zwar mittels eines an ihm vorgesehenen Betätigungsgriffes 18. Hierbei gleitet der Verschlußschieber 15 auf der äußeren Stirnseite des Auslaßrohrstücks 14, bis er dessen Entnahmeöffnung 13 freigibt.

Zwecks einwandfreien Andrückens des Verschlußschiebers 15 in der aus Fig. 1 und 3 ersichtlichen Schließstellung kann auf der von der Schwenkwelle 16 abgewandten Seite ein an einem Bolzen befestigter Verschlußkopf 37 vorgesehen sein, hinter den sich beim Verschließen ein konisch zusammenlaufender Verschlußbereich 38 des Verschlußschiebers 15 schiebt.

Unterhalb der Entnahmeöffnung 13 ist eine Rutsche 17 vorgesehen, unterhalb von der sich auf einer tischartigen Platte 39 eine Aufnahmeschüssel 40 oder ein anderes Aufnahmeelement für das Speiseeis befindet (Fig.3).

Nach Fig. 1 und 2 sind die oberen Enden benachbarter Lamellen 20 durch geradlinige Verbindungsstangen 22 miteinander formschlüssig verbunden. Die Verbindungsstangen 22 greifen an den inneren oberen Ecken der nach oben weisenden Schenkel der L-förmigen Lamellen 20 an.

Da die nach oben weisenden Schenkel der Lamellen 20 nur unten in der dargestellten Weise am Antriebswellenrohr 19 befestigt sind, liegt oberhalb der unteren horizontalen kurzen Schenkel ein durchgehender Zwischenraum 28 zwischen den nach oben weisenden Schenkeln der Lamellen 20 und dem Antriebswellenrohr 19 vor. Im Bereich der in radial inneren Kante 29 der nach oben weisenden Schenkel der Lamellen 20 kommt es daher bis ganz oben zu besonders intensiven Mischvorgängen.

Nach den Fig. 1 und 3 ist die erfindungsgemäße Speiseeismaschine so in ein Möbel 2 eingebaut, daß der Deckel 9 von oben geöffnet werden kann und der Verschlußschieber 15 mittels des Betätigungshandgriffes 18 von der Vorderseite her betätigbar ist. Auf einer Frontplatte 3 angeordneter Schaltknopf 41 kann die durch den Elektromotor 33 und das Untersetzungsgetriebe 34 gebildete Antriebseinheit 6 in zwei unterschiedlichen Drehrichtungen angetrieben werden, und zwar zum einen in der Arbeitsdrehrichtung G (Fig. 2) und mit erhöhter Geschwindigkeit in der Gegendrehrichtung H zwecks Ausstoßens des fertigen Produkts.

Relativ zur Drehachse 23 sind die Lamellen 20 in der aus Fig.1 ersichtlichen Weise um einen Winkel α von etwa 30° entgegen der Arbeitsdrehrichtung G (Fig. 2) gekippt am Antriebswellenrohr 19 befestigt.

Nach den Fig. 1 und 2 sind die nach oben weisenden Schenkel der Lamellen 20 von unten nach oben verschränkt bzw. tordiert, und zwar in der Weise, daß der durch Fig. 2 definierte Winkel β zwischen dem Horizontalschnitt des aufrechtstehenden Schenkels der Lamellen 20 von unten, wo er bevorzugt 90° beträgt, nach oben abnimmt und nach Fig.2 im oberen Bereich auf ca. 60° abgenommen hat. Auf diese Weise wird beim Antreiben in Arbeitsdrehrichtung G eine radial nach innen gerichtete Bewegungskomponente auf die Speiseeismasse übertragen.

Die Arbeitsweise der erfindungsgemäßen Speiseeismaschine ist wie folgt:

Zunächst öffnet die Bedienungsperson den vorzugsweise mit einem Kontakt für einen den Stillstand der Maschine herbeiführenden Sicherheitsschalter verbundenen Deckel 9 durch Herumschwenken um das Scharnier 10 (Fig. 1), worauf von oben die flüssige Speiseeismasse in gewünschter Menge eingefüllt wird. Aufgrund der erfindungsgemäßen Ausbildung braucht der Behälter 36 nicht voll gefüllt zu werden. Die Speiseeismaschine 1 arbeitet auch dann einwandfrei, wenn der Behälter 36 nur zu weniger als der Hälfte mit flüssiger Ausgangsmasse gefüllt wird.

Anschließend wird der Deckel 9 wieder zugeklappt und durch Betätigen des Schaltknopfes 41 das Rührwerk 5 in Arbeitsdrehrichtung G (Fig. 2) mit einer Drehzahl von 70 bis 100 Umdrehungen pro Minute (UpM) angetrieben.

Hierdurch wird die flüssige Masse radial nach außen und aufgrund der erfindungsgemäßen Ausbildung der Lamellen 20 auch an der Umfangswand 8 nach oben strömen. Im mittleren und oberen Bereich der aufrechtstehenden Schenkel der Lamellen 20 erhält dann die Masse eine Bewegungskomponente radial nach innen, so daß insgesamt eine Strömung im Sinne der gestrichelten Pfeile nach Fig. 1 erzielt wird. Die flüssige Masse wird somit in optimaler Weise an den großen Flächen der gekühlten Wände 7, 8 entlanggeführt, dort, soweit sie gefriert, abgeschabt und in dem Zwischenraum 28 wieder zum Absinken nach unten gebracht. Der in Fig. 1 gestrichelt dargestellten Strömung überlagert sich die durch die Drehung des Rührwerks 5 bedingte Bewegung der flüssigen Masse in Arbeitsdrehrichtung G.

Während dieses Vorganges wird die flüssige Masse immer teigartiger, bis das Speiseeis schließlich fertiggestellt ist.

Nunmehr stellt die Bedienungsperson die Schüssel 40 unter die Rutsche 17 (Fig. 3) und offnet den Verschlußschieber 15 durch Ergreifen des Betätigungsgriffes 18 und Schwenken des Verschlußschiebers entgegen dem Uhrzeigersinn in Fig. 3.

Anschließend wird dann der Betätigungsknopf 41 für den Elektromotor 33 in die Gegendrehstellung gebracht, worauf das Rührwerk 5 in entgegengesetzter Drehrichtung mit einer erhöhten Drehzahl von 150 bis 200 UpM angetrieben wird. Nunmehr wird auf die fertige Speiseeismasse insofern ein entgegengesetzter Effekt wie bei der Arbeitsdrehrichtung G ausgeübt, als auf die Speiseeismasse eine Bewegungskomponente radial außen und nach unten übertragen wird, während gleichzeitig die Zentrifugalkraft erhöht wird. In der Summe wird somit eine Kraft auf die Speiseeismasse ausgeübt, die sie intensiv in Richtung der Entnahmeöffnung 13 bewegt, wo sie austritt und über die Rutsche 17 in die Schüssel 40 gelangt.

Nachdem die Lamellen 20 die gesamte Bodenwand 7 und die gesamte Umfangswand 8 überstreichen, wird auf diese Weise die Speiseeismasse vollständig durch die Entnahmeöffnung 13 ausgestoßen, wozu auch die in etwa verdoppelte Drehzahl in Gegenrichtung H (Fig. 2) beiträgt.

Nach dem vollständigen Ausstoßen der fertigen Speieeismasse kann durch Öffnen des Deckels 9 und Abschrauben der Schraubkappe 21 das Antriebswellenrohr 19 mit den Lamellen 20 und den Verbindungsstangen 22 aus dem Behälter 36 zu Reinigungszwecken herausgenommen werden. In diesem Zustand kann auch das Innere des Behälters 36 einwandfrei gereinigt werden.

## Patentansprüche

1. Speiseeisherstellungsmaschine mit einem oben offenen, verschließbaren Isoliergefäß (4), das außen eine Isolierung (11) und innen einen Behälter (36) aufweist, hinter oder in dessen Wänden (7, 8) Kühlschlangen (12) vorgesehen sind und in dem konzentrisch ein Rührwerkzeuge (20) tragendes Rührwerk (5) mit mit der Behälterachse zusammenfallender Drehachse (23) angeordnet ist, das von unten durch eine Antriebseinheit (6) zu einer Rotationsbewegung antreibbar ist, wobei im Eckbereich zwischen der ebenen Bodenwand (7) und der kreiszylindrischen Umfangswand (8) eine durch ein von außen betätigbares Verschlußglied (15) wahlweise zu verschließende oder zu öffnende Entnahmeöffnung (13) vorgesehen ist,
**dadurch gekennzeichnet**,
daß das Rührwerk (5) durch die Antriebseinheit (6) in entgegengesetzten Drehrichtungen (G, H) antreibbar ist, daß die Antriebswelle (19, 32) im Bereich der Bodenwand (7) drehgelagert ist und daß die Rührwerkzeuge mit der Boden- und Umfangswand (7, 8) in schabendem Eingriff stehende, im wesentlichen L-förmige Lamellen (20) sind, die so angeordnet und ausgebildet sind, daß sie beim Antrieb des Rührwerks (5) in Arbeitsdrehrichtung (G) der im Behälter (36) befindlichen flüssigen oder teigförmigen Masse unten eine Bewegungskomponente radial nach außen und anschließend axial nach oben sowie oben eine Bewegungskomponente radial nach innen erteilen und daß sie beim Antrieb des Rührwerks (5) in Gegendrehrichtung (H) der im Behälter (36) befindlichen teigförmigen Masse eine Bewegungskomponente radial nach außen und axial nach unten erteilen.

2. Maschine nach Anspruch 1, dadurch gekennzeichnet, daß der Behälter aus Edelstahl besteht und/ oder daß sie einen Deckel aufweist, wobei vorzugsweise das Rührwerk unabhängig vom Deckel drehgelagert ist.

3. Speiseeisherstellungsmaschine nach einem der Ansprüche 1 bis 2, dadurch gekennzeichnet, daß oberhalb der unteren horizontalen Schenkel des Rührwerks ein durchgehender Zwischenraum (28) vorliegt.

4. Maschine nach einem der Ansprüche 1 bis 3, dadurch gekennzeichnet, daß die Lamellen (20) relativ zur Drehachse (23) entgegen der Arbeitsdrehrichtung (G) geneigt sind

5. Maschine nach Anspruch 4, dadurch gekennzeichnet, daß die Lamellen (20) unter einem Winkel (α) von 20 bis 40°, insbesondere 30° geneigt sind.

6. Maschine nach einem der vorhergehenden Ansprüche, dadurch gekennzeichnet, daß die Lamellen (20) unten und seitlich Schabkanten aufweisen (24, 25).

7. Maschine nach Anspruch 6, dadurch gekennzeichnet, daß die untere Schabkante durchgehend ist.

8. Maschine nach Anspruch 6 oder 7, dadurch gekennzeichnet, daß die seitliche Schabkante mit Ausnehmungen versehen ist.

9. Maschine nach einem der vorhergehenden Ansprüche, dadurch gekennzeichnet, daß das Rührwerk (5) ein zentrales, von der Antriebseinheit (6) angetriebenes Antriebswellenrohr (19) aufweist, an dem die Lamellen (20) vorzugsweise nur unten befestigt sind.

10. Maschine nach Anspruch 9, dadurch gekennzeichnet, daß die nach oben weisenden Schenkel der Lamellen (20) sich in radialer Richtung im wesentlichen über den gleichen Längenbruchteil eines Radius erstrecken wie der Zwischenraum (28) zwischen der Innenkante (29) der Lamellen (20) und dem zentralen Antriebsrohr (19).

11. Maschine nach einem der vorhergehenden Ansprüche, dadurch gekennzeichnet, daß die nach oben weisenden Schenkel der Lamellen (20) von unten nach oben tordiert sind, derart, daß der Winkel (β) mit der Tangente (R) am Berührungspunkt mit der Umfangswand (8) von unten nach oben abnimmt.

12. Maschine nach Anspruch 11, dadurch gekennzeichnet, daß der Winkel (β) mit der Tangente (R) stetig abnimmt und zwar bevorzugt von 90° auf 50 bis 70°, insbesondere 60°.

13. Maschine nach einem der Ansprüche 9 bis 12, dadurch gekennzeichnet, daß die benachbarten der nach oben weisenden Schenkel der Lamellen (20) oben durch Verbindungsstangen (22) verbunden sind, die vorzugsweise an den oberen radial inneren Ecken (30) der nach oben weisenden Schenkel der Lamellen (20) angreifen.

14. Maschine nach einem der vorhergehenden Ansprüche, dadurch gekennzeichnet, daß die nach oben weisenden Schenkel der Lamellen (20) sich von unten nach oben in radialer Richtung etwas verjüngen.

15. Maschine nach einem der vorhergehenden Ansprüche, dadurch gekennzeichnet, daß über den Umfang vorzugsweise gleichmäßig verteilt drei Rührwerkzeuge (20) vorgesehen sind.

16. Maschine nach einem der Ansprüche 9 bis 15, dadurch gekennzeichnet, daß das Antriebsrohr (19) ein fest mit der Bodenwand (7) des Isoliergefäßes (4) verbundenes stationäres Standrohr (31) umgibt, welches vorzugsweise bis annähernd zum oberen Ende des Isoliergefäßes (4) reicht und vom Antriebswellenrohr (19) etwas überragt wird, und daß sich von unten durch das Standrohr (31) eine mit der Antriebseinheit (6) verbundene Antriebswelle (32) erstreckt, die oben mit dem Antriebswellenrohr (19) vorzugsweise durch eine von außen zugängliche Schraubkappe (21) lösbar verbunden ist, wobei vorzugsweise oben zwischen Antriebswelle (32) und Standrohr (31) und/oder unten zwischen Antriebswellenrohr (19) und Standrohr (31) eine Ringdichtung oder Büchse (35 bzw. 35') vorgesehen ist.

17. Maschine nach einem der vorhergehenden Ansprüche, dadurch gekennzeichnet, daß das Rührwerk (5) in Gegendrehrichtung (H) mit größerer, vorzugsweise etwa doppelter Geschwindigkeit antreibbar ist als in der Arbeitsdrehrichtung (G).

18. Maschine nach Anspruch 17, dadurch gekennzeichnet, daß das Rührwerk (5) in Arbeitsdrehrichtung (G) mit einer Drehzahl von 70 bis 100 UpM und/oder in Gegendrehrichtung (H) mit einer Drehzahl von 150 bis 200 UpM antreibbar ist.

19. Maschine nach einem der vorhergehenden Ansprüche, dadurch gekennzeichnet, daß die Achse (26) der Entnahmeöffnung (13) im wesentlichen durch die Ecke zwischen der Bodenwand (7) und der Umfangswand (8) hindurchgeht.

20. Maschine nach einem der vorhergehenden Ansprüche, dadurch gekennzeichnet, daß die Achse (16) der Entnahmeöffnung (13) einen Winkel (γ) von 25 bis 45°, vorzugsweise 30 bis 40° und insbesondere 35° mit der Horizontalen einschließt.

21. Maschine nach einem der vorhergehenden Ansprüche, dadurch gekennzeichnet, daß der Verschlußschieber (15) quer zur Achse (26) der Entnahmeöffnung (13) verschwenkbar ist.

22. Maschine nach einem der vorhergehenden Ansprüche, dadurch gekennzeichnet, daß auch unter der Bodenwand (7) des Behälters (36) Kühlschlangen (12) angeordnet sind.

23. Maschine nach einem der vorhergehenden Ansprüche, dadurch gekennzeichnet, daß die Antriebseinheit (6) aus einem schnell umlaufenden Elektromotor (33) und einem nachgeschalteten Untersetzungsgetriebe (34) besteht, das vorzugsweise ein Untersetzungsverhältnis von 1:10 bis 1:20, insbesondere 1:15 aufweist.

24. Maschine nach einem der vorhergehenden Ansprüche, dadurch gekennzeichnet, daß das Höhen-/Durchmesserverhältnis des Behälters (36) zwischen 1,5:1 bis 0,8:1 beträgt.

25. Verfahren zur Herstellung von Speiseeis in einer Speiseeisherstellungsmaschine mit einem nach oben offenen, über die Boden- und/oder Umfangswände gekühlten Isolierbehälter, einem darin konzentrisch mit mit der Behälterachse zusammenfallender Drehachse angeordnetem, von unten in entgegengesetzten Drehrichtungen antreibbaren Rührwerk (5) mit im wesentlichen L-förmigen Lamellen, deren einer vorzugsweise durchgehender Schenkel mit der ebenen Bodenwand und dessen anderer, daran angeschlossener, zur Drehachse insbesondere geneigter Schenkel mit der kreiszylindrischen Umfangswand in schabendem Eingriff steht, und einer im Eckbereich zwischen der ebenen Bodenwand und der kreiszylindrischen Umfangswand vorgesehenen, verschließbaren Entnahmeöffnung, insbesondere nach einem der vorherigen Ansprüche, dadurch gekennzeichnet, daß bei verschlossener Entnahmeöffnung von oben Ausgangsmasse in gewünschter Menge in den Behälter eingefüllt und ggf. nach Schließen der Einfüllöffnung das Rührwerk (5) in Betrieb gesetzt wird, daß das Rührwerk in einer ersten Arbeitsdrehrichtung (G) derart angetrieben wird, daß die flüssige Masse radial nach außen und an der Umfangswand (8) nach oben strömt und dort, soweit sie an der Umfangswand angefriert, von den Lamellen abgeschabt wird, daß die flüssige Masse oben radial nach innen strömt und anschließend axial nach unten zum Absinken gebracht wird, sowie im Bodenbereich wieder radial nach außen und axial nach oben strömt, bis die flüssige Masse immer teigartiger und schließlich zu fertiggestelltem Speiseeis wird, daß dann die Entnahmeöffnung (13) geöffnet wird und das Rührwerk (20) in einer zweiten, der ersten Arbeitsdrehrichtung (G) entgegengesetzten Ausstoß-Drehrichtung (H) derart angetrieben wird, daß die Speiseeismasse durch die Entnahmeöffnung ausgestoßen wird.

26. Verfahren nach Anspruch 25, dadurch gekennzeichnet, daß das Rührwerk zum Ausstoßen mit größerer Drehzahl als bei Rühren in Arbeitsdrehrichtung (H) und insbesondere in etwa mit doppelter Drehzahl angetrieben wird.

27. Verfahren nach Anspruch 25 oder 26, dadurch gekennzeichnet, daß während der Speiseeisherstellung in dem Behälter von oben feste und/oder flüssige Zusätze eingeschüttet werden.

28. Verfahren nach einem der Ansprüche 25 bis 26, dadurch gekennzeichnet, daß der Speiseeismasse im oberen Bereich von den nach oben weisenden Schenkeln der L-förmigen Lamellem radial nach innen eine wesentlich reduzierte Drehbewegung erteilt wird.

29. Verfahren nach einem der Ansprüche 25 bis 27, dadurch gekennzeichnet, daß bei einem vollständigen Umlauf des Rührwerks jeder Bereich der Umfangswand zumindest einmal abgeschabt wird.

## Claims

1. Machine for manufacturing ice cream, comprising an insulating vessel (4) which is open at the top and can be closed and which has insulation at the outside and a container (36) at the inside, behind which or in the walls (7, 8) of which refrigerating loops (12) are provided and in which there is concentrically arranged a stirrer mechanism (5) carrying stirring tools (20) and having an axis of rotation (23) which coincides with the axis of the container, wherein the stirrer mechanism (5) can be driven from below by a drive unit (6) to execute a rotational movement, and wherein a removal opening (13) is provided in the corner region between the planar base wall (7) and the cylindrical peripheral wall (8) and can be selectively closed or opened by a closure member (15) actuatable from the outside, characterised in that the stirring mechanism (5) can be driven in opposite directions of rotation (G, H) by the drive unit (6); in that the drive shaft (19, 32) is rotationally journalled in the region of the base wall (7), and in that the stirrer tools are substantially L-shaped blades (20) which are in scraping engagement with the base and circumferential walls (7, 8), with the blades being so arranged and shaped that, on driving the stirrer mechanism (5) in the direction of working rotation (G), they impart to the liquid or pasty composition contained in the container (36) a component of movement radially outwardly and subsequently axially upwardly and at the top also a component of movement radially inwardly, and in that on driving the stirrer mechanism (5) in the opposite direction of rotation (H) they impart to the pasty composition located in the container (6).a component of movement radially outwardly and axially downwardly

2. Machine in accordance with claim 1, characterised in that the container consists of stainless steel and/or that it has a lid, with the stirrer mechanism preferably being rotationally journalled independently of the lid.

3. Machine for manufacturing ice cream in accordance with one of the claims 1 to 2, characterised in that a continuous intermediate space (28) is present above the lower horizontal limb of the stirrer mechanism.

4. Machine in accordance with one of the claims 1 to 3, characterised in that the blades (20) are inclined opposite to the direction of working rotation (G) relative to the axis of rotation (23).

5. Machine in accordance with claim 4, characterised in that the blades (20) are inclined at an angle α of 20 to 40°, in particular 30°.

6. Machine in accordance with one of the preceding claims, characterised in that the blades (20) have scraper edges (24, 25) at the bottom and at the side.

7. Machine in accordance with claim 6, characterised in that the lower scraper edge is continuous.

8. Machine in accordance with claim 6 or claim 7, characterised in that the scraper edge at the side is provided with cut-outs.

9. Machine in accordance with one of the preceding claims, characterised in that the stirrer mechanism (5) has a central drive shaft tube (19) driven by the drive unit (6) and to which the blades (20) are secured, preferably only at the bottom.

10. Machine in accordance with claim 9, characterised in that the upwardly directed limbs of the blades (20) extend in the radial direction substantially over the same length fraction of a radius as the intermediate space (28) between the inner edge (29) of the blades (20) and the central drive tube (19).

11. Machine in accordance with one of the preceding claims, characterised in that the upwardly pointing limbs of the blades (20) are twisted from the bottom towards the top in such a way that the angle (β) with the tangent (R) at the point of contact with the peripheral wall (8) reduces from the bottom towards the top.

12. Machine in accordance with claim 11, characterised in that the angle (β) to the tangent (R) continuously reduces, and indeed preferably from 90° to 50 to 70°, in particular to 60°.

13. Machine in accordance with one of the claims 9 to 12, characterised in that neighbouring ones of the upwardly pointing limbs of the blades (20) are connected at the top by connection bars (22) which preferably attach to the upper radially inner corners (30) of the upwardly pointing limbs of the blades (20).

14. Machine in accordance with one of the preceding claims, characterised in that the upwardly pointing limbs of the blades (20) taper somewhat in the radial direction from the bottom towards the top.

15. Machine in accordance with one of the preceding claims, characterised in that three stirring tools (20) are provided which are preferably uniformly distributed around the circumference.

16. Machine in accordance with one of the claims 9 to 15, characterised in that the drive tube (19) surrounds a stationary upright tube (31) which preferably extends approximately up to the upper end of the insulated vessel (4) and beyond which the drive shaft tube (19) projects somewhat, and in that a drive shaft (32) connected to the drive unit (6) extends from the bottom through the upright tube (31) and is releasably connected at the top to the drive shaft tube (19), preferably via a threaded cap (21) which is accessible from the outside, with a ring seal or sleeve (35 or 35') preferably being provided at the top between the drive shaft (32) and the upright tube (31) and/or at the bottom between the drive shaft tube (19) and the upright tube (31).

17. Machine in accordance with one of the preceding claims, characterised in that the stirrer mechanism (5) can be driven in the counter-direction (H) at a greater speed, and preferably at approximately twice the speed, that it can be driven in the direction of working rotation (G).

18. Machine in accordance with claim 17, characterised in that the stirrer mechanism (5) can be driven in the direction of working rotation (G) with a speed of rotation of 70 to 100 rpm and/or in the counter direction of rotation (H) with a speed of rotation of 150 to 200 rpm.

19. Machine in accordance with one of the preceding claims, characterised in that the axis (26) of the removal opening (13) passes substantially through the corner between the base wall (7) and the peripheral wall (8).

20. Machine in accordance with one of the preceding claims, characterised in that the axis (16) of the removal opening (13) includes with the horizontal an angle (γ) of 25 to 45°, preferably 30 to 40°, and in particular of 35°.

21. Machine in accordance with one of the preceding claims, characterised in that the closure slider (15) can be pivoted transversely to the axis (26) of the removal opening (13).

22. Machine in accordance with one of the preceding claims, characterised in that refrigeration loops (12) are also arranged beneath the base wall (7) of the container (36).

23. Machine in accordance with one of the preceding claims, characterised in that the drive unit (6) consists of a rapidly rotating electric motor (33) and a subsequent step-down transmission (34) which preferably has a step-down ratio of 1:10 to 1:20, in particular of 1:15.

24. Machine in accordance with one of the preceding claims, characterised in that the height/diameter ratio of the container (36) amounts to between 1.5:1 to 0.8:1.

25. Method of manufacturing ice cream in an ice cream manufacturing machine the machine comprising an upwardly open insulating container cooled via the base and/or circumferential walls, a stirrer mechanism (5) concentrically arranged therein with an axis of rotation coinciding with the container axis and drivable in opposite directions of rotation, with the stirrer mechanism (5) having substantially L-shaped blades of which a preferably continuous limb stands in scraping engagement with the planar base wall and of which the other limb, which is attached thereto, and is in particular inclined to the axis of rotation, stands in scraping engagement with the right-cylindrical circumferential wall, and a closable removal opening provided in the corner region between the planar base wall and the right-cylindrical circumferential wall, in particular in accordance with one of the preceding claims, characterised in that the starting composition is filled into the container in the desired quantity from the top with the removal opening closed, and, after optionally closing the filling opening, the stirrer mechanism (5) is set into operation; in that the stirrer mechanism is rotated in a first direction of working rotation (G) in such a way that the liquid composition flows radially outwardly and upwardly at the circumferential wall (8) and is scraped off by the blades to the extent that it freezes onto the circumferential wall; in that the liquid composition flows radially inwardly at the top and is subsequently caused to sink axially downwardly and also to flow radially outwardly again in the base region and to flow axially upwardly until the liquid composition becomes progressively more pasty and finally becomes the finished ice cream; in that the removal opening (13) is then opened and the stirrer mechanism (20) is driven in a second expulsion direction of rotation (H) opposite to the first direction of working rotation (G) in such a way that the ice cream mass is expelled through the removal opening.

26. Method in accordance with claim 25, characterised in that the stirrer mechanism can be operated for the expulsion at a greater speed of rotation then when stirring in the direction of working rotation (G) and can in particular be driven at approximately twice the speed of rotation.

27. Method in accordance with claim 25 or 26, characterised in that solid and/or liquid additives are poured in from the top during the manufacture of ice cream in the container.

28. Method in accordance with one of the claims 25 to 26, characterised in that a substantially reduced rotational movement is imparted to the ice cream composition in the radially inner direction in the upper region by the upwardly pointing limbs of the L-shaped blades.

29. Method in accordance with one of the claims 25 to 27, characterised in that, for a complete revolution of the stirrer mechanism, each region of the peripheral wall is scraped off at least once.

## Revendications

1. Machine de production de glace comestible, comprenant un récipient isolant (4), ouvert en haut et capable d'être refermé, qui comporte à l'extérieur une isolation (11) et à l'intérieur un récipient (36), avec des serpentins de refroidissement (12) prévus derrière ou dans les parois (7, 8) de ce récipient, et avec un mécanisme agitateur (5) portant des outils agitateurs (20) qui est agencé de façon concentrique à l'axe de rotation (23) qui coïncide avec l'axe du récipient, ledit mécanisme agitateur pouvant être entraîné suivant un déplacement en rotation depuis le bas au moyen d'une unité d'entraînement (6), et il est prévu dans la région de coin entre la paroi de fond plane (7) et la paroi périphérique (8) en forme de cylindre droit une ouverture de prélèvement (13) susceptible d'être ouverte et fermée à volonté au moyen d'un organe de fermeture (15) actionné depuis l'extérieur,
caractérisée en ce que le mécanisme agitateur (5) est susceptible d'être entraîné par l'unité d'entraînement (5) dans des directions de rotation opposées (G, H), en ce que l'arbre d'entraînement (19, 32) est monté en rotation dans la région de la paroi de fond (7), et en ce que les outils agitateurs sont des lamelles (20) sensiblement en forme de L, en engagement de raclage avec la paroi de fond et la paroi périphérique (7, 8), qui sont agencées et réalisées de telle manière que lors de l'entraînement du mécanisme agitateur (5) dans la direction de rotation de travail (G) elles appliquent à la masse liquide ou pâteuse qui se trouve en bas dans le récipient (36) une composante de déplacement radiale vers l'extérieur et ensuite axiale vers le haut, et à la masse qui se trouve en haut dans le récipient une composante de déplacement radial vers l'intérieur, et en ce que, lors de l'entraînement dit mécanisme agitateur (5) dans la direction de rotation opposée (H) elles appliquent à la masse pâteuse qui se trouve dans le récipient (36) une composante de déplacement radiale vers l'extérieur et axiale vers le bas.

2. Machine selon la revendication 1, caractérisée en ce que le récipient est réalisé en acier inoxydable et/ou en ce qu'elle comporte un couvercle, le mécanisme agitateur étant de préférence monté en rotation indépendamment du couvercle.

3. Machine selon l'une ou l'autre des revendications 1 et 2, caractérisée en ce qu'il est prévu au-dessus des bras horizontaux inférieurs du mécanisme agitateur un espace intermédiaire continu (28).

4. Machine selon l'une quelconque des revendications 1 à 3, caractérisée en ce que les lamelles (20) sont inclinées par rapport à l'axe de rotation (23) en sens contraire à la direction de rotation de travail (G).

5. Machine selon la revendication 4, caractérisée en ce que les lamelles (20) sont inclinées sous un angle (α) de 20 à 40°, en particulier 30°.

6. Machine selon l'une quelconque des revendications précédentes, caractérisée en ce que les lamelles (20) comportent en bas et sur le côté des arêtes de raclage (24, 25).

7. Machine selon la revendication 6, caractérisée en ce que l'arête de raclage inférieure est continue.

8. Machine selon l'une ou l'autre des revendications 6 et 7, caractérisée en ce que l'arête de raclage latérale est pourvue d'évidements.

9. Machine selon l'une quelconque des revendications précédentes, caractérisée en ce que le mécanisme agitateur (5) comporte un arbre tubulaire d'entraînement (19) central et entraîné par l'unité d'entraînement (6), sur lequel les lamelles (20) sont fixées, de préférence uniquement en bas.

10. Machine selon la revendication 9, caractérisée en ce que les bras dirigés vers le haut des lamelles (20) s'étendent en direction radiale sensiblement sur la même fraction de longueur d'un rayon que l'espace intermédiaire (28) entre l'arête intérieure (29) des lamelles (20) et le tube d'entraînement central (19).

11. Machine selon l'une quelconque des revendications précédentes, caractérisée en ce que les bras des lamelles (20) dirigés vers le haut sont tordus depuis le bas vers le haut, de telle manière que l'angle (β) avec la tangente (R) au point de contact avec la paroi périphérique (8) diminue du bas vers le haut.

12. Machine selon la revendication 11, caractérisée en ce que l'angle (β) avec la tangente diminue constamment, et ceci de préférence depuis 90° jusqu'à 50 à 70°, en particulier 60°.

13. Machine selon l'une quelconque des revendications 9 à 12, caractérisée en ce que les bras voisins des bras des lamelles (20) dirigés vers le haut, sont reliés en haut par des tiges de liaison (22), qui attaquent de préférence au niveau des coins radialement intérieurs supérieurs des bras des lamelles (20) dirigés vers le haut.

14. Machine selon l'une quelconque des revendications précédentes, caractérisée en ce que les bras des lamelles (20) dirigés vers le haut vont légèrement en se rétrécissant depuis le bas vers le haut en direction radiale.

15. Machine selon l'une quelconque des revendications précédentes, caractérisé en ce qu'il est prévu trois outils agitateurs (20), répartis de préférence de manière égale sur la périphérie.

16. Machine selon l'une quelconque des revendications 9 à 15, caractérisée en ce que le tube d'entraînement (19) entoure un tube vertical stationnaire (31) solidairement relié à la paroi de fond (7) du récipient isolant (4), ledit tube stationnaire s'étendant de préférence jusqu'à proximité de l'extrémité supérieure du récipient isolant (4), et étant légèrement dépassé par le tube d'entraînement (19), et en ce qu'un arbre d'entraînement (32) relié à l'unité d'entraînement (6) s'étend depuis le bas à travers le tube vertical (31), ledit arbre d'entraînement étant relié de façon détachable en haut au tube d'entraînement (19), de préférence au moyen d'un capuchon à vis (21) accessible depuis l'extérieur, et il est de préférence prévu en haut entre l'arbre d'entraînement (32) et le tube stationnaire (31), et/ou en bas entre le tube d'entraînement (19) et le tube stationnaire (31) une bague ou une douille d'étanchéité (35 ou 35').

17. Machine selon l'une quelconque des revendications précédentes, caractérisée en ce que le mécanisme agitateur (5) est susceptible d'être entraîné dans la direction de rotation inverse (H) avec une vitesse supérieure, de préférence environ double, que dans la direction de rotation de travail (G).

18. Machine selon la revendication 17, caractérisée en ce que le mécanisme agitateur (5) est susceptible d'être entraîné dans la direction de rotation de travail (G) avec une vitesse de rotation de 70 à 100 t/mn et/ou dans la direction de rotation inverse (H) avec une vitesse de rotation de 150 à 200 t/mn.

19. Machine selon l'une quelconque des revendications précédentes, caractérisée en ce que l'axe (26) de l'ouverture de prélèvement (13) traverse sensiblement le coin entre la paroi de fond (7) et la paroi périphérique (8).

20. Machine selon l'une quelconque des revendications précédentes, caractérisée en ce que l'axe (16) de l'ouverture de prélèvement (13) enferme un angle (γ) de 25 à 45°, de préférence de 30 à 40°, et en particulier de 35° avec l'horizontale.

21. Machine selon l'une quelconque des revendications précédentes, caractérisée en ce que le tiroir de fermeture (15) est capable de pivoter perpendiculairement à l'axe (26) de l'ouverture de prélèvement (13).

22. Machine selon l'une quelconque des revendications précédentes, caractérisé en ce que des serpentins de refroidissement (12) sont également agencés au-dessous de la paroi de fond (7) du récipient (36).

23. Machine selon l'une quelconque des revendications précédentes, caractérisée en ce que l'unité d'entraînement (6) est constituée par un moteur électrique (33) à rotation rapide, et par une transmission à démultiplication (34) agencée derrière celui-ci, qui présente de préférence un rapport de démultiplication de 1:10 à 1:20.

24. Machine selon l'une quelconque des revendications précédentes, caractérisée en ce que le rapport hauteur/diamètre du récipient (36) s'élève entre 1,5:1 jusqu'à 0,8:1.

25. Procédé de production de glace comestible dans une machine de production de glace comestible comprenant un récipient isolant ouvert vers le haut et refroidi via la paroi de fond et les parois périphériques, un mécanisme agitateur (5), agencé de façon concentrique à l'intérieur de ce récipient avec un axe de rotation qui coïncide avec l'axe du récipient et susceptible d'être entraîné dans des directions de rotation opposées, ledit mécanisme agitateur comprenant des lamelles sensiblement en forme de L, dont l'un des bras, de préférence continu, est en engagement de raclage avec la paroi de fond plane, et dont l'autre bras, raccordé au premier bras et en particulier incliné par rapport à l'axe de rotation, est en engagement de raclage avec la paroi périphérique en forme de cylindre droit, et une ouverture de prélèvement prévue dans la région de coin entre la paroi de fond plane et la paroi périphérique cylindrique, susceptible d'être obturée, en particulier selon l'une quelconque des revendications précédentes, caractérisé en ce que, lorsque l'ouverture de prélèvement est obturée, on remplit depuis le haut dans le récipient une masse de départ en quantité désirée, et le cas échéant après fermeture de l'ouverture de remplissage, on met en service le mécanisme agitateur (5), en ce qu'on entraîne le mécanisme agitateur dans une première direction de rotation de travail (G), de manière que la masse liquide s'écoule radialement vers l'extérieur et vers le haut contre la paroi périphérique (8), et à cet endroit, elle est raclée par les lamelles, pour autant qu'elle se soit congelée contre la paroi périphérique, en ce que la masse liquide s'écoule en haut radialement vers l'intérieur et en ce qu'elle est enfin amenée à descende axialement vers le bas, puis s'écoule à nouveau radialement vers l'extérieur et axialement vers le haut dans la région du fond, jusqu'à ce que la masse liquide devienne de plus en plus pâteuse et se transforme enfin en glace comestible prête à l'emploi, en ce que l'on ouvre ensuite l'ouverture de prélèvement (13) et l'on entraîne le mécanisme agitateur (20) dans une seconde direction de rotation (H) de distribution, opposée à la première direction de rotation de travail (G), de manière que la masse de glace comestible soit chassée à travers l'ouverture de prélèvement.

26. Procédé selon la revendication 25, caractérisé en ce que le mécanisme agitateur est entraîné, pour la distribution, avec une vitesse de rotation supérieure à celle de l'agitation dans la direction de rotation de travail (G), et en particulier à une vitesse de rotation environ double.

27. Procédé selon l'une ou l'autre des revendications 25 et 26, caractérisé en ce que pendant la production de glace comestible dans le récipient, on déverse depuis le haut des additifs solides et/ou liquides.

28. Procédé selon l'une ou l'autre des revendications 25 et 26, caractérisé en ce qu'un mouvement de rotation sensiblement réduit est imparti radialement vers l'intérieur à la masse de glace comestible dans la région supérieure par les bras des lamelles en forme de L dirigés vers le haut.

29. Procédé selon l'une quelconque des revendications 25 à 27, caractérisé en ce que pour une rotation complète du mécanisme agitateur, chaque région de la paroi périphérique est raclée au moins une fois.
